# EUROPÄISCHE PATENTSCHRIFT

(11) **EP 1 006 035 B1**
(45) Veröffentlichungstag und Bekanntmachung des Hinweises auf die Patenterteilung: **09.04.2003**
(21) Anmeldenummer: 99117349.3
(22) Anmeldetag: 03.09.1999
(51) Int. Cl.: B61D 17/04, B62D 33/04, B62D 27/02, F16B 7/04

(54) **Verbindung von zwei Leichtbauprofilen**
Joint for two lightweight profiles
Connexion pour deux profilés légers

(30) Priorität: 02.12.1998 DE 19855576
(43) Veröffentlichungstag der Anmeldung: 07.06.2000
(73) Patentinhaber: SIEMENS AKTIENGESELLSCHAFT, 80333 München (DE)
(72) Erfinder: Altenburg, Klaus, Dr.-Ing., 52146 Würselen (DE); Zimmermann, Michael, Dipl.-Ing., 52066 Aachen (DE)

(56) Entgegenhaltungen:
- EP-A- 0 623 755
- DE-C- 19 737 049
- DE-U- 9 414 427

## Beschreibung

Die Erfindung betrifft eine Verbindung von zwei Leichtbauprofilen mittels Schrauben- oder Schließringbolzen innerhalb einer gemeinsamen Verbindungsebene. Aus der DE-C-197 37 049 ist eine versenkte Verbindung zwischen zwei parallelverlaufenden Leichtbauprofilen bekannt.

Eine Verbindung dieser Art wird bevorzugt dort verwendet, wo beispielsweise ein Langträger an einen oder mehrere Querträger angeschlossen werden muss.

Der Erfindung liegt die Aufgabe zugrunde, an die Stimseite von einem oder mehreren Leichtbauprofilen ein zweites Leichtbauprofil anzuschließen. Dabei soll die Verbindung von der Außenseite des anzuschließenden Leichtbauprofils her verwirklicht werden können. Darüber hinaus soll die Verbindung in ihrem Aufbau einfach sein und, bei Bedarf, wieder gelöst werden können. Insbesondere soll die Verbindung von den Möglichkeiten der modernen Technik des Laserschneidens und Laserschweißens Gebrauch machen.

Diese Aufgabe wird dadurch gelöst, dass das erste Leichtbauprofil wenigstens einen , lotrecht aus der Verbindungsebene vorspringenden Zapfen hat, der eine Längsbohrung aufweist und in eine Hülse eingreift, die das zweite Leichtbauprofil durchdringt, mit einer ihrer Stirnseiten an die Verbindungsebene angrenzt und einen Boden hat, der eine Bohrung aufweist, welche mit der Bohrung des Zapfens fluchtet, wobei der Schrauben- oder Schließringbolzen durch beide Bohrungen hindurchführbar und von der der Verbindungsebene abgewandten zweiten Stirnseite der Hülse her verschließbar ist. Mit diesen Merkmalen ist die gestellte Aufgabe lösbar. Dabei wird in den überwiegenden Fällen eine Verbindung zwischen zwei rechtwinklig zueinander angeordneten Leichtbauprofilen hergestellt. Davon abweichend kann aber auch eine Verbindung zwischen zwei Leichtbauprofilen hergestellt werden, die unter einem beliebigen Winkel zueinander stehen.

Nach einer ersten Ausgestaltungsmöglichkeit ist die Längsbohrung des Zapfens mit einem Innengewinde versehen, in welches der Schraubenbolzen eingreift. Nach einer zweiten Ausgestaltungsmöglichkeit weist der Schaft des Zapfens eine Ausnehmung auf, die sich wenigsten bis zu seiner Längsbohrung erstreckt und in Form und Größe so ausgestaltet ist, dass der Schrauben- oder Schließringbolzen vor dem Schließen der Verbindung von der Seite her in den Zapfen eingeführt werden kann. Beim Anschließen eines Langträgers, als zweites Leichtbauprofil, an einen Querträger, als erstes Leichtbauprofil, wird also der Langträger mit seinen Hülsen auf den Schrauben- oder Schließringbolzen und den Zapfen aufgefädelt.

Nach einer weiteren Möglichkeit ist die Ausnehmung des Zapfens derart ausgestaltet, das auch der jeweilige Kopf des Schrauben- oder Schließringbolzens von der Seite her in den Zapfen eingeführt werden kann. Diese Ausgestaltung ist in solchen Fällen von Vorteil, wo das erste Leichtbauprofil in sich geschlossen ist, sodass ein Anbringen von Schrauben- oder Schließringbolzen nachträglich von innen her nicht mehr Möglich ist.

Der Zapfen und die Hülse passen aufeinander. Der Zapfen greift in die Hülse ein und kann dabei eine runde, ovale oder die Querschnittsform eines Vielecks haben, der eine eben solche Querschnittsform der Hülse entspricht.

Von Vorteil ist es, wenn der Boden der Hülse, welcher die Kräfte auf das zweite Leichtbauprofil überträgt, auf ihrer der Verbindungsebene abgewandten zweiten Stimseite abgesenkt ist. Dadurch ist es möglich, den Schrauben- oder Schließringbolzen so anzubringen, dass er aus der Kontur des zweiten Leichtbauprofils nicht hervorsteht. Auch können die beiden Stirnseiten der Hülse unterschiedliche Außendurchmesser haben. Eine solche Ausgestaltung wird bevorzugt, um Verwechslungen bei der Montage der Hülse am zweiten Leichtbauprofil zu vermeiden. Fertigungstechnisch kann die Hülse als Fließpressteil hergestellt werden.

Zur Einleitung der Kräfte in das erste Leichtbauprofil hat sich eine Platte bewährt, mit welcher die Stimseite des ersten Leichtbauprofils verschlossen ist. Aus dieser Platte springt der Zapfen hervor. Die Platte erstreckt sich in der Verbindungsebene und der Zapfen ist an der Platte dauerhaft befestigt, wie auch die Platte an dem ersten Leichtbauprofil dauerhaft befestigt ist. Ebenso ist die Hülse an dem zweiten Leichtbauprofil dauerhaft befestigt.

Als bevorzugte Befestigung von Zapfen, Platte, Hülse, erstem und zweitem Leichtbauprofil hat sich eine Befestigungsart erwiesen, welche verzugfrei ist. Hierbei kommen Kleb- oder Schweißverbindungen, und bei letzteren insbesondere die Laserschweißung, in Betracht. Der Vorteil der Laserschweißung besteht bekanntlich darin, dass möglichst wenig Energie in die Umgebung des Werkstücks eingetragen wird, nämlich dort wo es mit dem Laserstrahl jeweils bearbeitet wird. Der Vorteil davon ist eine hochgenaue Verbindung, welche beispielsweise mit anderen Schweißverfahren kaum erreichbar ist.

Die Platte und der Zapfen können nach einer weiteren vorteilhaften Ausgestaltungsmöglichkeit aber auch als Feingussteile ausgebildet sein. Hierbei fällt sinngemäß eine zusätzliche Befestigung zwischen der Platte und dem Zapfen fort und allein die Platte wird am ersten Leichtbauprofil befestigt.

Bei einer runden Querschnittsform von Zapfen und Hülse sind auf einer Platte jeweils eine Mehrzahl von Verbindungen vorgesehen. Die Längsachsen dieser Verbindungen haben einen gegenseitigen Abstand voneinander und verlaufen zueinander parallel. Auf diese Weise wird eine hohe Lagegenauigkeit zwischen dem ersten und dem zweiten Leichtbauprofil erreicht. Die runde Querschnittsform ist bekanntlich viel einfacher herzustellen als jede davon abweichende Form. Neben einer Steigerung der Festigkeit einer solchen Verbindung wird zugleich auch dafür gesorgt, dass eine vorgegebene geometrische Anordnung beider Leichtbauprofile mit hoher Genauigkeit eingehalten werden kann Üblicherweise erfolgt die Verbindung zwischen beiden Leichtbauprofilen unter einem rechten Winkel. Davon abweichend können aber auch beliebige spitze Winkel zwischen beiden Leichtbauprofilen mit hoher geometrischer Genauigkeit realisiert werden.

In derselben Verbindungsebene kann eine Mehrzahl von Platten vorgesehen sein. Eine solche Konfiguration stellt sich beispielsweise ein, wenn mehrer Querträger, als erstes Leichtbauprofil, mit einem einzigen Langträger, als zweites Leichtbauprofil, verbunden werden sollen. Die den Abschluss der jeweiligen Querträger bildenden Platten werden vor der Verbindung mit dem Langträger auf hochgenauen Werkzeugmaschinen so bearbeitet; dass sie alle in der Verbindungsebene liegen. Damit wir eine verzugfreie Anbringung des Langträgers an mehreren Querträgem möglich.

Wie bereits angedeutet, ist vorgesehen, dass das erste Leichtbauprofil als Quer- und das zweite Leichtbauprofil als Langträger angeordnet sein kann. Es ist aber auch möglich, diese Reihung umzukehren, sodass das erste Leichtbauprofil als Langträger und das zweite Leichtbauprofil als Querträger innerhalb einer Gruppe von Leichtbauprofilen angeordnet werden. Bevorzugt wird eine solche Baugruppe beim Aufbau der tragenden Strukturen von Eisenbahnfahrzeugen. Analog dazu erschließen sich dieser Verbindungsmöglichkeit aber auch noch weitergehende Anwendungsmöglichkeiten. Die besonderen Vorteile der Verbindung ergeben sich aus den einzelnen Unteransprüchen.

Nachfolgend wird die Erfindung an einem Ausführungsbeispiel näher beschrieben. Es zeigen im verkleinerten Maßstab die
- Figur 1 einen Ausschnitt aus einer Baugruppe in perspektivischer Ansicht und
- Figur 2 eine vergrößerte Einzelheit der Verbindung entsprechend dem Kreis A der Figur 1.

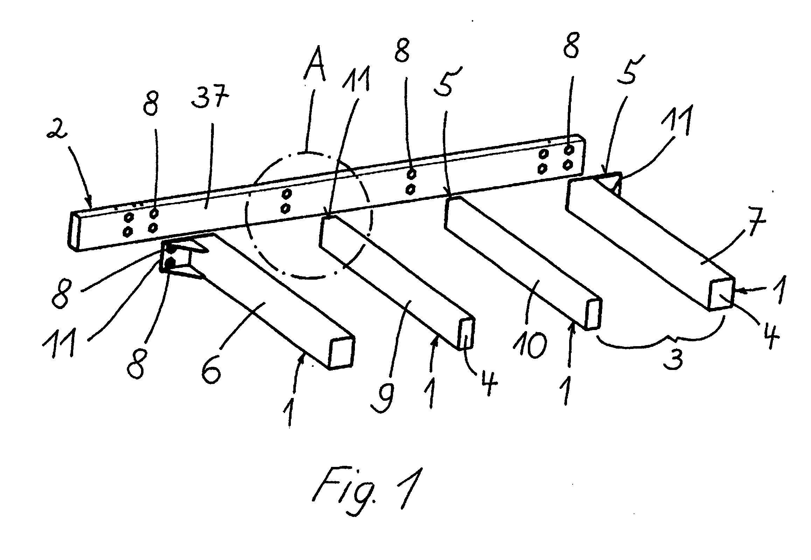

Der in der Figur 1 dargestellte Ausschnitt aus einer Baugruppe zeigt zunächst mehrere Leichtbauprofile 1, die zueinander parallel verlaufen und einen gegenseitigen Abstand 3 voneinander haben. Die ersten Leichtbauprofile 1 haben Querschnitte 4, die voneinander in Größe und Form abweichend sein können. Die ersten Leichtbauprofile 1 bilden beispielsweise die Querträger 6,7,9,10 der Baugruppe. Vor den äußeren Stirnseiten 5 der ersten Leichtbauprofile 1 ist ein zweites Leichtbauprofil 2 vorgesehen. Das zweite Leichtbauprofil bildet beispielsweise den Langträger 37 der Baugruppe. Soweit erkennbar, sind für die Verbindung der beiden äußeren Querträger 6 und 7 beispielsweise jeweils vier Zapfenverbindungen 8 vorgesehen, während es bei den beiden inneren Querträgem 9 und 10 jeweils nur zwei sind. Ebenso wie die ersten Leichtbauprofile 1 hat das zweite Leichtbauprofil 2 einen rechteckigen Querschnitt, der in seiner Größe wiederum unterschiedlich ist von den Querschnitten der äußeren, 6 und 7 und der inneren Querträger 9 und 10.

Deutlich erkennbar werden die äußeren Stirnseiten 5 der äußeren Querträger 6 und 7 jeweils von einer Platte 11 abgeschlossen. Die Platte 11 kragt seitlich über den Querschnitt 4 der äußeren Querträger 6 und 7 hinaus und hat jeweils zwei zusätzliche Zapfenverbindungen 8. Eine ähnliche Platte 11 muss man sich auch als stimseitigen Abschluss der inneren Querträger 9 und 10 vorstellen.

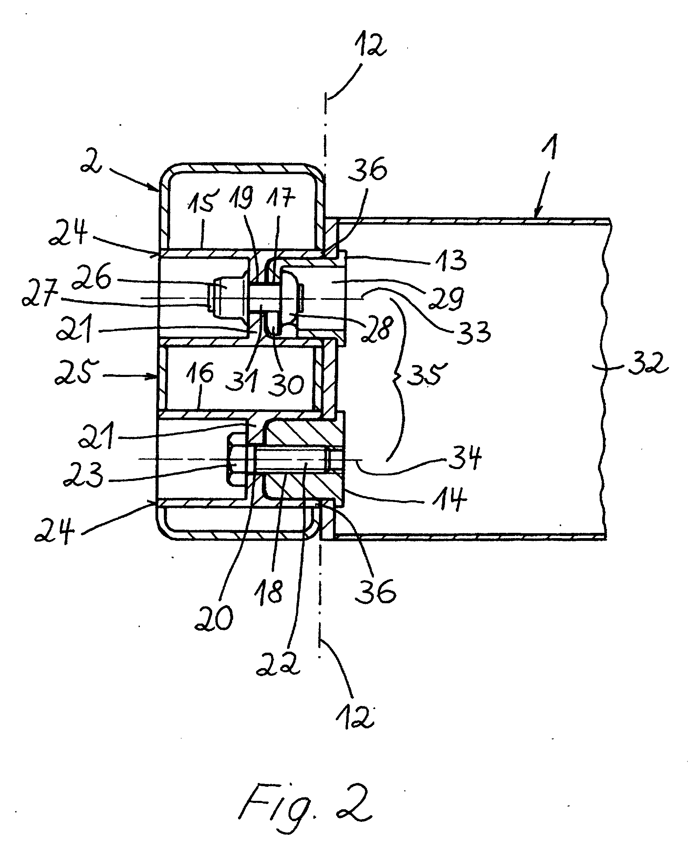

Die Figur 2 zeigt die Verbindung zwischen einem ersten Leichtbauprofil 1 und einem zweiten Leichtbauprofil 2 in einer vergrößerten Darstellung. Die beiden Leichtbauprofile 1 und 2 werden längs der gemeinsamen Verbindungsebene 12, die durch eine strichpunktierte Linie angedeutet ist, miteinander verbunden.

Die äußere Stimseite 5 des ersten Leichtbauprofils 1 wird von einer Platte 11 verschlossen. In diese Platte 11 sind zwei Zapfen 13 und 14 eingelassen. Beispielsweise sind die beiden Zapfen 13 und 14 an der Platte 11 durch Laserschweißung fest und dauerhaft befestigt.

Wie erkennbar, springen die beiden Zapfen 13 und 14 aus der gemeinsamen Verbindungsebene 12 hervor und greifen in Hülsen 15 und 16 ein, von denen das zweite Leichtbauprofil 2 durchdrungen wird. Ähnlich, wie die Zapfen 13 und 14 mit der Platte 11, sind auch die beiden Hülsen 15 und 16 an dem zweiten Leichtbauprofil 2 durch Laserschweißung fest und dauerhaft befestigt. Hierbei ist anzumerken, dass die Platte 11 selbst an dem ersten Leichtbauprofil 1 mit einer Laserschweißung befestigt ist.

Jeder der beiden Zapfen 13 und 14 weist eine Längsbohrung 17 bzw. 18 auf. Diese beiden Längsbohrungen 17 und 18 fluchten mit Längsbohrungen 19 und 20, welche im Boden 21 der beiden Hülsen 15 und 16 vorgesehen sind. Beispielsweise ist die Längsbohrung 18 des Zapfens 14 als Gewindebohrung ausgebildet und in dieses Gewinde greift ein Schraubenbolzen 22 ein, welcher durch die Bohrung 20 des Bodens 21 der Hülse 16 hindurchgeführt ist. Die Böden 21 sind gegenüber den äußeren Stirnseiten 24 der beiden Hülsen 45 und 16 abgesenkt, wie man das in der Figur 2 deutlich erkennen kann. Damit wird erreicht, dass der Kopf 23 des Schraubenbolzens 22 nicht aus der äußeren Kontur 25 des Querschnitts des zweiten Leichtbauprofils 2 hervortritt.

Das gleiche trifft zu für den Fuß 26 eines Schließringbotzens 27, mit welchem der Zapfen 13 mit der Hülse 15 verbunden ist. Zur Aufnahme des Kopfes 28 des Schließringbolzens 27 weist der Zapfen 13 eine Ausnehmung 29 auf. Die Ausnehmung 29 ist so ausgestaltet, dass der Schließringbolzen 27 nachträglich von der Seite 30 her in den Zapfen 13 eingeführt werden kann, nachdem der Zapfen 13 bereits über die Platte 11 an dem ersten Leichtbauprofil 1 befestigt ist. Die Ausnehmung 29 und ihr seitlicher Einschnitt 30, der breit genug ist, dass der Schaft 31 des Schließringbolzens hindurchgeführt werden kann, ermöglichen das nachträgliche Anbringen des Schließringbolzens 27 in Fällen, wo eine Zugänglichkeit von der Innenseite 32 des ersten Leichtbauprofils 1 nicht mehr gegeben ist. Allein durch diese Ausgestaltung ist es möglich, dass der Schließringbolzen 27 nach dem Setzen von der äußeren Kontur 25 des zweiten Leichtbauprofils 2 her verschlossen werden kann

Die modernen Fertigungsverfahren des Laserschneidens- und schweißen ermöglichen ein genaues Einhalten beispielsweise des Abstands 35 zwischen den beiden Längsachsen 33 und 34 der Bohrungen 17,18, 19 und 20. Was in der Figur 2 im Kleinen gezeigt ist, trifft unter der Voraussetzung der Verwendung der modernen Lasertechnik auch für die Abstände 3 zu, welche zwischen den Querträgem 7 und 10 und 9 und 6 einzuhalten sind. Auf diese Weise kann mit Hilfe der Lasertechnik das Einhalten eines vorgegebenen Maß- Passsystems mit großer Genauigkeit erzielt werden.

### Ziffernverzeichnis

- 1: erstes Leichtbauprofil
- 2: zweites Leichtbauprofil
- 3: gegenseitiger Abstand
- 4: Querschnitt
- 5: äußere Stirnseite
- 6: äußerer Querträger
- 7: äußerer Querträger
- 8: Zapfenverbindung
- 9: innerer Querträger
- 10: innerer Querträger
- 11: Platte
- 12: Verbindungsebene
- 13: Zapfen
- 14: Zapfen
- 15: Hülse
- 16: Hülse
- 17: Längsbohrung
- 18: Längsbohrung
- 19: Bohrung
- 20: Bohrung
- 21: Boden
- 22: Schraubenbolzen
- 23: Kopf des Schraubenbolzens
- 24: äußere Stirnseite
- 25: äußere Kontur
- 26: Fuß
- 27: Schließringbolzen
- 28: Kopf
- 29: Ausnehmung
- 30: Einschnitt
- 31: Schaft
- 32: Innenseite
- 33: Längsachse
- 34: Längsachse
- 35: Abstand
- 36: Stirnseite
- 37: Langträger

## Patentansprüche

1. Verbindung von zwei Leichtbauprofilen (1, 2) mittels Schrauben- oder Schließringbolzen (22 bzw. 27) innerhalb einer gemeinsamen Verbindungsebene, **dadurch gekennzeichnet, dass** die Verbindung aus wenigstens einem lotrecht aus der Verbindungsebene (12) mit dem ersten Leichtbauprofil (1) vorspringenden Zapfen (13,14) besteht, welcher Zapfen eine Längsbohrung (17,18) aufweist und
- in eine Hülse (15,16) eingreift, die das zweite Leichtbauprofil (2) durchdringt, mit einer ihrer Stirnseiten (36) an die Verbindungsebene (12) angrenzt und einen Boden (21) hat, der eine Bohrung (19,20) aufweist, welche mit der Bohrung (17,18) des Zapfens (13,14) fluchtet, wobei
- der Schrauben- (22) oder Schließringbolzen (27) durch beide Bohrungen (17,18,19,20) hindurchführbar und von der der Verbindungsebene (12) abgewandten zweiten Stirnseite (24) der Hülse (15,16) her verschließbar ist.

2. Verbindung nach Anspruch 1, **dadurch gekennzeichnet, dass** die Längsbohrung (18) des Zapfens (14) mit einem Innengewinde versehen ist, in welches der Schraubenbolzen (22) eingreift.

3. Verbindung nach Anspruch 1, **dadurch gekennzeichnet, dass** der Schaft des Zapfens (13) eine Ausnehmung (30) aufweist, die sich wenigstens bis zu seiner Längsbohrung (17) erstreckt und in Form und Größe so ausgestaltet ist, dass der Schrauben- (22) oder Schließringbolzen (27) vor dem Schließen der Verbindung von der Seite her in den Zapfen (13) eingeführt werden kann.

4. Verbindung nach Anspruch 3, **dadurch gekennzeichnet, dass** die Ausnehmung (29) des Zapfens (13) so ausgestaltet ist, dass auch der jeweilige Kopf des Schrauben- (22) oder Schließringbolzens (27) von der Seite her in den Zapfen (13) eingeführt werden kann.

5. Verbindung nach einem der Ansprüche 1 bis 4, **dadurch gekennzeichnet, dass** der Zapfen (13,14) und die Hülse (15,16) eine runde, ovale, oder die Querschnittsform eines Vielecks haben.

6. Verbindung nach einem der Ansprüche 1 bis 5, **dadurch gekennzeichnet, dass** der Boden (21) der Hülse (15,16) auf ihrer der Verbindungsebene (12) abgewandten zweiten Stirnseite (24) abgesenkt ist.

7. Verbindung nach Anspruch 6, **dadurch gekennzeichnet, dass** die beiden Stirnseiten (24,36) der Hülse (15,16) unterschiedliche Außendurchmesser haben.

8. Verbindung nach einem der Ansprüche 1 bis 5, **dadurch gekennzeichnet, dass** der Zapfen (13,14) aus einer Platte (11) hervorspringt und an dieser dauerhaft befestigt ist, welche sich in der Verbindungsebene (12) erstreckt und ihrerseits an dem ersten Leichtbauprofil (1) dauerhaft befestigt ist.

9. Verbindung nach einem der Ansprüche 1 bis 5, **dadurch gekennzeichnet, dass** die Hülse (15,16) an dem zweiten Leichtbauprofil (2) dauerhaft befestigt ist.

10. Verbindung nach einem der Ansprüche 8 oder 9, **dadurch gekennzeichnet, dass** die jeweilige Befestigung zwischen Platte (11), Zapfen (13,14), Hülse (15,16) mit dem jeweiligen Leichtbauprofil (1,2) als Kleb- oder Schweißverbindung, insbesondere Laserschweißung, ausgeführt ist.

11. Verbindung nach Anspruch 8, **dadurch gekennzeichnet, dass** die Platte (11) und der Zapfen (13,14) als einstückiges Feingussteil ausgebildet sind.

12. Verbindung nach Anspruch 5, **dadurch gekennzeichnet, dass** bei einer runden Querschnittsform von Zapfen (13,14) und Hülse (15,16), auf einer Platte (11) eine Mehrzahl von Verbindungen vorgesehen ist, deren Längsachsen (33,34) in einem gegenseitigen Abstand (35) und zueinander parallel verlaufen.

13. Verbindung nach Anspruch 12, **dadurch gekennzeichnet, dass** in derselben Verbindungsebene (12) eine Mehrzahl von Platten (11) vorgesehen ist.

14. Verbindung nach einem der Ansprüche 1 bis 13, **dadurch gekennzeichnet, dass** das erste Leichtbauprofil (1) als Quer- (6,7,9,10) und das zweite Leichtbauprofil (2) als Langträger (37) oder umgekehrt einer Baugruppe aus Leichtbauprofilen (1,2) vorgesehen ist.

15. Verbindung nach Anspruch 14, **dadurch gekennzeichnet, dass** die Verbindung beim Aufbau von tragenden Strukturen von Eisenbahnfahrzeugen verwendet wird.

## Claims

1. Connection of two lightweight profiles (1, 2) by means of screw bolts or retaining ring bolts (22 and 27, respectively) within a common connecting plane, **characterized in that**
- the connection comprises at least one pin (13, 14) projecting perpendicularly from the connecting plane (12) with the first lightweight profile (1), which pin has a longitudinal bore (17, 18) and
- engages in a sleeve (15, 16), which penetrates through the second lightweight profile (2), is adjacent with one of its end faces (36) to the connecting plane (12) and has a base (21), which has a bore (19, 20) which is in line with the bore (17, 18) of the pin (13, 14), in which arrangement
- the screw bolt (22) or retaining ring bolt (27) can be led through both bores (17, 18, 19, 20) and can be locked from the second end face (24) of the sleeve (15, 16), which is remote from the connecting plane (12).

2. Connection according to Claim 1, **characterized in that** the longitudinal bore (18) of the pin (14) is provided with an internal thread, in which the screw bolt (22) engages.

3. Connection according to Claim 1, **characterized in that** the shank of the pin (13) has a clearance (30), which extends at least up to its longitudinal bore (17) and is shaped in form and size in such a way that the screw bolt (22) or retaining ring bolt (27) can be inserted into the pin (13) from the side before the closing of the connection.

4. Connection according to Claim 3, **characterized in that** the clearance (29) of the pin (13) is shaped in such a way that the respective head of the screw bolt (22) or retaining ring bolt (27) can also be inserted into the pin (13) from the side.

5. Connection according to one of Claims 1 to 4, **characterized in that** the pin (13, 14) and the sleeve (15, 16) have a round or oval cross section, or the cross-sectional form of a polygon.

6. Connection according to one of Claims 1 to 5, **characterized in that** the base (21) of the sleeve (15, 16) is recessed on its second end face (24), which is remote from the connecting plane (12).

7. Connection according to Claim 6, **characterized in that** the two end faces (24, 36) of the sleeve (15, 16) have different outside diameters.

8. Connection according to one of Claims 1 to 5, **characterized in that** the pin (13, 14) projects from a plate (11) and is permanently fastened to the latter, which extends in the connecting plane (12) and for its part is permanently fastened to the first lightweight profile (1).

9. Connection according to one of Claims 1 to 5, **characterized in that** the sleeve (15, 16) is permanently fastened to the second lightweight profile (2).

10. Connection according to either of Claims 8 and 9, **characterized in that** the respective fastening between the plate (11), pin (13, 14) and sleeve (15, 16) and the respective lightweight profile (1, 2) takes the form of an adhesive or welded connection, in particular a laser weld.

11. Connection according to Claim 8, **characterized in that** the plate (11) and the pin (13, 14) are formed as a one-piece precision casting.

12. Connection according to Claim 5, **characterized in that**, in the case of a round cross-sectional form of the pin (13, 14) and sleeve (15, 16), a plurality of connections are provided on a plate (11), the longitudinal axes (33, 34) of which connections run parallel to one another with a spacing (35) between them.

13. Connection according to Claim 12, **characterized in that** a plurality of plates (11) are provided in the same connecting plane (12).

14. Connection according to one of Claims 1 to 13, **characterized in that** the first lightweight profile (1) is provided as a transverse member (6, 7, 9, 10) and the second lightweight profile (2) is provided as a longitudinal member (37), or vice versa, of an assembly comprising lightweight profiles (1, 2).

15. Connection according to Claim 14, **characterized in that** the connection is used in the construction of load-bearing structures of railway vehicles.

## Revendications

1. Connexion pour deux profilés légers (1, 2) au moyen de boulons filetés ou de boulons avec anneau de blocage (22, respectivement 27) à l'intérieur d'un plan de connexion commun, **caractérisée en ce que** la connexion se compose d'au moins un tenon (13, 14) saillant perpendiculairement hors du plan de connexion (12) avec le premier profilé léger (1), tenon qui présente un trou longitudinal (17, 18) et qui s'engage dans une douille (15, 16) qui traverse le second profilé léger (2), qui affleure par une de ses faces d'extrémité (36) dans le plan de connexion (12) et qui comporte un fond (21), qui présente un trou (19, 20) qui est aligné avec le trou (17, 18) du tenon (13, 14), dans laquelle le boulon fileté (22) ou le boulon avec anneau de blocage (27) peut être introduit à travers les deux trous (17, 18, 19, 20) et peut être serré à partir de la seconde face d'extrémité (24) de la douille (15, 16) située à l'opposé du plan de connexion (12).

2. Connexion suivant la revendication 1, **caractérisée en ce que** le trou longitudinal (18) du tenon (14) est pourvu d'un filet intérieur, dans lequel le boulon fileté (22) est engagé.

3. Connexion suivant la revendication 1, **caractérisée en ce que** le corps du tenon (13) présente un évidement (30), qui s'étend au moins jusqu'à son trou longitudinal (17) et qui présente une forme et une grandeur telles que le boulon fileté (22) ou le boulon à anneau de blocage (27) puisse être introduit par le côté dans le tenon (13) avant le serrage de la connexion.

4. Connexion suivant la revendication 3, **caractérisée en ce que** l'évidement (29) du tenon (13) est configuré de façon telle que la tête du boulon fileté (22) ou du boulon à anneau de blocage (27) respectivement puisse également être introduite par le côté dans le tenon (13).

5. Connexion suivant l'une quelconque des revendications 1 à 4, **caractérisée en ce que** le tenon (13, 14) et la douille (15, 16) présentent une section transversale de forme ronde, ovale ou polygonale.

6. Connexion suivant l'une quelconque des revendications 1 à 5, **caractérisée en ce que** le fond (21) de la douille (15, 16) est enfoncé sur sa seconde face d'extrémité (24) située à l'opposé du plan de connexion (12).

7. Connexion suivant la revendication 6, **caractérisée en ce que** les deux faces d'extrémité (24, 36) de la douille (15, 16) présentent des diamètres extérieurs différents.

8. Connexion suivant l'une quelconque des revendications 1 à 5, **caractérisée en ce que** le tenon (13, 14) est saillant hors d'une plaque (11) et est durablement fixé à celle-ci, qui s'étend dans le plan de connexion (12) et qui est à son tour durablement fixée au premier profilé léger (1).

9. Connexion suivant l'une quelconque des revendications 1 à 5, **caractérisée en ce que** la douille (15, 16) est durablement fixée au second profilé léger (2).

10. Connexion suivant l'une quelconque des revendications 8 ou 9, **caractérisée en ce que** chaque fixation de la plaque (11), d'un tenon (13, 14), d'une douille (15, 16) avec le profilé léger respectif (1, 2) est réalisée par un assemblage collé ou soudé, en particulier par soudage au laser.

11. Connexion suivant la revendication 8, **caractérisée en ce que** la plaque (11) et le tenon (13, 14) sont façonnés d'un seul tenant par coulée de précision.

12. Connexion suivant la revendication 5, **caractérisée en ce que**, dans le cas d'une section transversale ronde du tenon (13, 14) et de la douille (15, 16), il est prévu sur une plaque (11) une pluralité de connexions dont les axes longitudinaux (33, 34) sont parallèles l'un à l'autre à une distance (35) l'un de l'autre.

13. Connexion suivant la revendication 12, **caractérisée en ce qu'**il est prévu une pluralité de plaques (11) dans le même plan de connexion (12).

14. Connexion suivant l'une quelconque des revendications 1 à 13, **caractérisée en ce que** le premier profilé léger (1) est prévu comme traverse (6, 7, 9, 10) et le second profilé léger (2) est prévu comme longeron (37), ou inversement, d'un module de construction composé de profilés légers (1, 2).

15. Connexion suivant la revendication 14, **caractérisée en ce que** la connexion est utilisée lors de la construction de structures portantes de véhicules ferroviaires.
